Europäisches Patentamt

European Patent Office

Office européen des brevets

(11) Veröffentlichungsnummer: **0 387 896**
**A1**

## (12) EUROPÄISCHE PATENTANMELDUNG

(21) Anmeldenummer: **90105005.4**

(22) Anmeldetag: **16.03.90**

(51) Int. Cl.5: **B65G 13/08**

(30) Priorität: **17.03.89 DE 3908856**

(43) Veröffentlichungstag der Anmeldung:
**19.09.90 Patentblatt 90/38**

(84) Benannte Vertragsstaaten:
**AT BE CH DE DK ES FR GB GR IT LI LU NL SE**

(71) Anmelder: **S.A.E.A. INNOVATIONSPRODUKTE GmbH**
**Goettweiger-Strasse 53**
**D-8390 Passau(DE)**

(72) Erfinder: **Schmalzl, Ekkehard**
**Am Schlierbach 5**
**D-7860 Schopfheim(DE)**

(74) Vertreter: **Kuhnen, Wacker & Partner**
**Schneggstrasse 3-5 Postfach 1553**
**D-8050 Freising(DE)**

(54) **Multidirektionaler Antrieb für Rollenbahnen oder dergleichen.**

(57) Ein multidirektionaler Antrieb für Rollenbahnen oder dergl., der in der Lage ist, ein darauf abgestelltes zu förderndes Gut reversierbar in der X- und Y-Richtung zu fördern, weist im wesentlichen eine Mehrzahl von hintereinander auf einer Wellenanordnung (8) angeordneten Rollenkörper (4, 6) auf, wobei die Wellenanordnung (8) aus einer hohlen Mantelwelle (10) und einer darin koaxial gelagerten Drehwelle (12) besteht. Mantelwelle und Drehwelle sind voneinander unabhängig drehbar bzw. synchron miteinander drehbar, wobei in den Rollenkörpern (4, 6) angeordnete Zahnräder (14, 16, 18), die auf die Mantelwelle (10) bzw. Drehwelle (12) aufgebrachten Drehrichtungen derart umsetzen, daß die Rollenkörper (4, 6) entweder senkrecht zur Längsachse der Wellenanordnung (8) oder um diese drehen. .

## Multidirektionaler Antrieb für Rollenbahnen oder dergleichen

Die Erfindung betrifft einen multidirektionalen Antrieb für Rollenbahnen oder dergleichen, nach dem Oberbegriff des Anspruches 1.

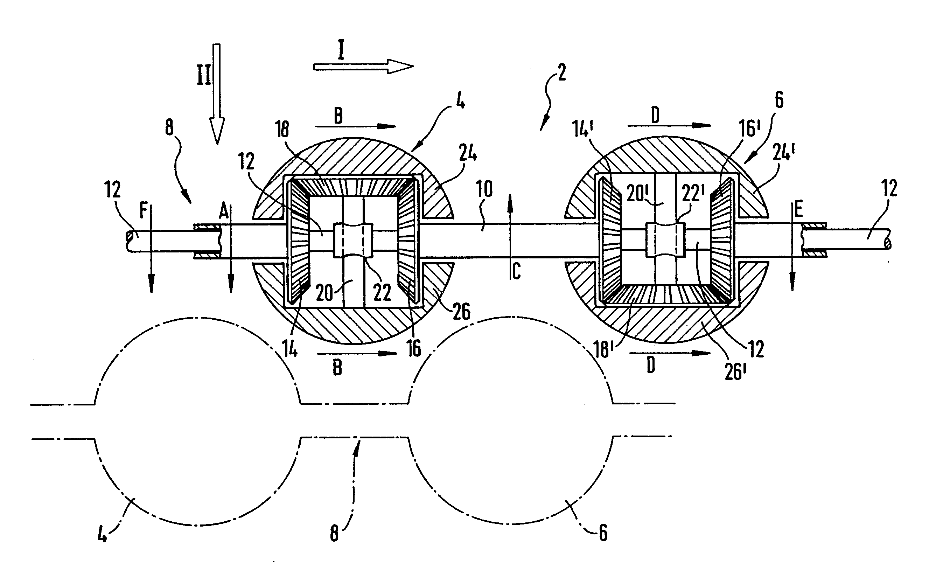

Es sind Antreibe für Rollenbahnen bekannt, bei denen eine Mehrzahl von in einer Ebene angeordneten Rollen auf zueinander parallelen Drehachsen angeordnet ist, wobei durch einen entsprechenden Antrieb der einzelnen Drehachsen die hiermit drehfest verbundenen Rollen ebenfalls in Drehung versetzt werden. Es ist auch bekannt, derartige Antriebe reversierbar auszubilden, d.h., die Drehrichtung der Drehachsen und damit der Rollen kann von linkslaufend auf rechtslaufend und umgekehrt umgeschaltet werden. Ein auf der Rollenbahn bzw. deren Rollen gelagertes Fördergut wird durch die Drehung der Rollen in deren Drehrichtung gefördert. Eine derartige Rollenbahn ist beispielsweise in der DE-AS 1 237 003 in der dortigen Fig. 1 schematisch dargestellt. Wie weiterhin aus der Fig. 1 der DE-AS 1 237 003 hervorgeht, besteht bei Rollenbahnen das Problem, daß mit ihnen abrupte Richtungswechsel, beispielsweise Abzweigungen um 90° oder dergl. konstruktiv nicht zu bewerkstelligen sind, da derart enge Krümmungsradien mittels herkömmlicher Rollenbahnen nicht realisierbar sind. Die DE-AS 1 237 003 schlägt daher vor, in dem Eckbereich zweier horizontal voneinander um 90° abzweigender Rollenbahnen einen Kugeltisch anzuordnen, mittels dem das auf der einen Rollenbahn ankommende zu fördernde Gut zunächst angehalten und dann um 90° in Förderrichtung der abzweigenden Rollenbahn weiterbewegt werden kann. Der Kugeltisch gemäß der DE-AS 1 237 003 besteht aus einer Mehrzahl von in Kalotten gelagerten Kugeln, die durch individuell zuschaltbare Antriebskupplungen entweder in Förderrichtung der einen Rollenbahn oder um 90° hierzu versetzt in Förderrichtung der anderen Rollenbahn antreibbar sind.

Der Kugeltisch gemäß der DE-AS 1 237 003 weist eine Vielzahl von individuell anzusteuernden Einzelteilen auf und ist somit in seinem Aufbau relativ komplex, was wiederum zu einer Störanfälligkeit, insbesondere unter rauhen Betriebsbedingungen führt.

Aus der gattungsgemäßen DE-AS 25 15 009 ist ein multidirektionaler Antrieb für Rollenbahnen in Form eines Umsetzers bekannt geworden, der ebenfalls in Form eines Tisches im Eckbereich zweier Zueinander um 90° versetzter Rollenbahnen angeordnet ist. Hierbei ist der in dem Eckbereich angeordnete Tisch derart diagonal unterteilt, daß sich zwei rechtwinklige Dreiecke ergeben, wobei jeweils eine Kathete der rechtwinkligen Dreiecke die freien Außenseiten des Kugeltisches bilden und die beiden verbleibenden Katheten an das freie Ende der Rollen bahnen angrenzen. In jedem der rechtwinkligen Dreiecke ist eine Mehrzahl von Wellen mit darauf angeordneten Rollenkörpern vorgesehen, wobei die Anzahl der auf den Wellen gelagerten Rollenkörper mit wachsendem Abstand von der Rollenbahn im Zuge der Verjüngung des sich dort anschließenden rechtwinkligen Dreieckes abnimmt. Die Längsachsen der Wellen in den beiden rechtwinkligen Dreiecken stehen hierbei zueinander in einem Winkel von 90° jeweils entsprechend der Hauptförderrichtung der zugehörigen Rollenbahn.

Die Rollenkörper selbst bestehen aus einem Grundkörper, der drehfest auf der zugehörigen Welle gelagert ist, wobei der Grundkörper umfangsseitig eine Mehrzahl von drehbeweglich gelagerten Hilfsrollen trägt, wobei die Drehachsen der einzelnen Hilfsrollen senkrecht zur Achse der Welle stehen, die den Rollenkörper trägt.

Ein fiktiver Punkt oder eine Mantellinie eines jeden Rollenkörpers ist somit in der Lage, entweder in Längsrichtung der zugehörigen Welle oder senkrecht hierzu zu drehen, so daß auf der einen Rollenbahn ankommendes Fördergut mittels des Umsetzers gemäß der DE-AS 25 15 009 im Zuge seines Auflaufens auf den Umsetzer zunächst abgebremst und dann durch entsprechenden Antrieb der beiden Sätze von Rollenkörpern um 90° abgezweigt werden kann.

Auch der Umsetzer gemäß der DE-AS 25 15 009 ist für rauhen Betrieb nur bedingt geeignet, da eine Vielzahl von Achsen und entsprechenden Lagerführungen im Bereich der Rollenkörper nötig ist. Darüber hinaus ist nur ein bestimmter Teil der jeweils tragenden Rollenkörper angetrieben, nämlich nur der Teil der Rollenkörper, die auf den jeweils treibenden Wellen sitzen, wohingegen die Hilfstragkörper lediglich frei mitlaufen, so daß ein gleichmäßiges und exaktes Fördern in der X-Y-Ebene und hierbei noch im Reversierbetrieb nur bedingt möglich ist.

Es ist daher Aufgabe der vorliegenden Erfindung, einen multidirektionalen Antrieb für Rollenbahnen oder dergleichen, nach dem Oberbegriff des Anspruches 1 derart auszubilden, daß bei gleichzeitig einfachem und robustem Aufbau ein Zuverlässiger multidirektionaler Betrieb möglich ist.

Die Lösung dieser Aufgabe erfolgt erfindungsgemäß durch die im Anspruch 1 angegebenen Merkmale.

Vorteil und zweckmäßige Weiterbildungen der Aufgabenlösung ergeben die Merkmale der Unteransprüche.

Weitere Einzelheiten, Aspekte und Vorteile der vorliegenden Erfindung ergeben sich aus der nachfolgenden Beschreibung unter Bezugnahme auf die Zeichnung.

Die einzige Figur der Zeichnung zeigt schematisch vereinfacht und in teilweiser Schnittdarstellung eine vorzugsweise Ausführungsform eines erfindungsgemäßen multidirektionalen Antriebs für Rollenbahnen oder dergleichen.

Gemäß der Zeichnung weist ein erfindungsgemäßer multidirektionaler Antrieb 2 eine Mehrzahl von Rollenkörpern 4, 6 auf, die hintereinander auf einer Wellenanordnung 8 gelagert sind.

In der Figur sind nur zwei Rollenkörper 4 und 6 dargestellt; es versteht sich jedoch, daß eine Mehrzahl von Rollenkörpern angeordnet sein kann, wobei weiterhin noch eine Mehrzahl von Wellenanordnungen 8 parallel nebenein ander angeordnet werden kann, wobei die einzelnen Rollenkörper 4 und 6 auf den Wellenanordnungen 8 vorteilhafterweise zueinander versetzt sind, wie in der Figur strichpunktiert dargestellt.

Wie weiterhin aus der Figur hervorgeht, besteht die Wellenanordnung 8 im wesentlichen aus einer äußeren hohlen Mantelwelle 10, welche eine innere, ggf. massive, Drehwelle 12 koaxial umfaßt. Wie weiterhin aus der Zeichnung hervorgeht, ist die Mantelwelle 10 im Bereich der Rollenkörper 4 und 6 unterbrochen, so daß im im dortigen Bereich die innere Drehwelle 12 freiliegt. Durch die Unterbrechung der Mantelwelle 10 im Bereich der Rollenkörper 4 und 6 liegen jeweils im Bereich eines Rollenkörpers, beispielsweise im Bereich des Rollenkörpers 4 an der Mantelwelle 10 zwei freie, einander gegenüberliegende Stirnseiten vor, wobei gemäß der vorliegenden Erfindung an diesen freien Stirnseiten Zahnräder 14 und 16 drehfest gelagert sind. Die Zahnräder 14 und 16 sind hierbei vorzugsweise Kegelräder und weisen in ihrem Drehachsenbereich eine entsprechend dimensionierte Bohrung auf, durch welche die Drehwelle 12 hindurchtreten kann. Ggf. kann im Durchtrittsbereich der Drehwelle 12 durch die Zahnräder 14 und 16 (14' und 16') eine Lagerbuchse zur Führung der Drehwelle 12 vorgesehen sein, so daß eine saubere Führung von Mantelwelle, Drehwelle und der einzelnen Zahnräder untereinander sichergestellt ist. Besonders vorteilhaft werden hierzu Sinterlager verwendet, welche ausgezeichnete Dauer- und Notlaufeigenschaften haben.

Die beiden Zahnräder 14 und 16 im Bereich des Rollenkörpers 4 bzw. 14' und 16' im Bereich des Rollenkörpers 6 sind getriebemäßig miteinander über ein Zwischenrad 18 bzw. 18' gekoppelt, welches mit den beiden Zahnrädern 14 und 16 bzw. 14' und 16' kämmt und dessen Drehachse senk recht zur Drehachse der Zahnräder 14 und 16 bzw. 14' und 16' steht. Das Zwischenrad 18 bzw. 18' ist hierbei vorzugsweise ebenfalls ein Kegelrad.

An das Zwischenrad 18 bzw. 18' drehfest angeflanscht ist ein Zwischenwelle 20 bzw. 20', deren Längsachse senkrecht zur Längsachse der Wellenanordnung 8 steht und welche - wie aus der Figur hervorgeht - die Drehwelle 12 im Bereich einer geeigneten Lagerausnehmung 22 bzw. 22' durchsetzt. Mit anderen Worten, die Zwischenwelle 20 bzw. 20' ist durch die Lageranordnung 22 bzw. 22' drehbar in und hierbei senkrecht zu der Drehwelle 12 der Wellenanordnung 8 gelagert.

Ein jeder der Rollenkörper 4, 6 besteht erfindungsgemäß aus zwei Teilkörpern 24 und 26 bzw. 24' und 26', wobei gemäß der Zeichnung der Teilkörper 24 des Rollenkörpers 4 mit dem Zwischenrad 18 drehfest verbunden ist, der Teilkörper 26 des Rollenkörpers 4 mit der Zwischenwelle 20 drehfest verbunden ist, der Teilkörper 24' des Rollenkörpers 6 mit der Zwischenwelle 20 drehfest verbunden ist und der Teilkörper 26' des Rollenkörpers 6 mit dem Zwischenrad 18' drehfest verbunden ist. Die Teilkörper sind hierbei wenigstens annähernd in Form von Halbkugeln ausgebildet. Wesentlich hierbei ist, daß die Anordnung des Zwischenrades 18 bzw. des darauffolgenden Zwischenrades 18' bzw. des wieder darauf folgenden Zwischenrades 18 etc. in der Zeichenebene der Figur derart ist, daß die Zwischenräder einmal oberhalb und einmal unterhalb der Wellenanordnung 8 zu liegen kommen.

In der Zeichnung nicht dargestellt sind Lageranordnungen zur Abstützung der Wellenanordnung 8 bzw. der Mantelwelle 10 und der Drehwelle 12 gegenüber einem ortsfesten Gestell, sowie Antriebe für Mantelwelle 10 und Drehwelle 12 und Kupplungsvorrichtungen zum Kuppeln von Mantel welle 10 mit Drehwelle 12 bzw. zum Lösen der Kupplung zwischen Mantelwelle 10 und Drehwelle 12. Funktion und Wirkungsweise des erfindungsgemäßen multidirektionalen Antriebes 2 wird nun im folgenden - weiterhin unter Bezugnahme auf die Zeichnung- erläutert:

Die Mantelwelle 10 der Wellenanordnung 8 ist durch geeignete Lagereinrichtungen gegenüber einem ortsfesten Gestell derart abgestützt, daß die halbkugelförmigen Teilkörper 24 und 26 bzw. 24' und 26' der Rollenkörper 4 und 6 in einer gewünschten Höhe frei über dem ortsfesten Gestell gehalten sind. Erfolgt bei stillstehender Drehwelle 12 die Einleitung eines Drehmoment an der Mantelwelle 10 dergestalt, daß das in der Zeichnung linke Teilstück der Mantelwelle 10 in Richtung des Pfeiles A dreht, erfolgt eine Drehmitnahme des Zahnrades 14, welches hierbei auf der Drehwelle 12 dreht. Das Zwischenrad 18, das in Eingriff mit dem Zahnrad 14 steht, dreht somit ebenfalls und damit auch der an dem Zwischenrad 18 drehfest gelagerte Teilkörper 24 des Rollenkörpers 4. Aufgrund der drehfesten Kupplung zwischen dem Teilkörper 24 und dem Teilkörper 26 durch die Zwischenwelle 20 erfolgt eine Drehmitnahme im gleichen Sinn des Teilkörpers 26, so daß die beiden Teilkörper 24 und 26 in Richtung des Pfeiles B in der Figur drehen. Das Zahnrad 16, welches mit dem Zwischenrad 18 in Eingriff steht und welches auf der Drehwelle 12 gelagert und mit dem in der Zeichnung mittleren Abschnitt der Mantelwelle 10 drehfest verbunden ist, wird durch die Drehung des Zwischenrades 18 mitgenommen, so daß das Zahnrad 16 sowie das Zwischenstück der Mantelwelle 10 in der Figur in Richtung des Pfeiles C drehen. Mit anderen Wort, durch die Anordnung der Zahnräder 14, 16 und 18 erfolgt eine Umkehrung der Drehrichtung zwischen dem in der Figur linken Teilstück der Mantelwelle 10 und dem in der Figur mittleren Teilstück der Mantelwelle 10.

Eine Drehung der Mantelwelle 10 in Richtung des Pfeiles C bewirkt eine Drehmitnahme des Zahnrades 14' in dem Rollenkörper 6 und da das Zwischenrad 18' in dem Rollenkörper 6 gegenüber dem Zwischenrad 18 in dem Rollenkörper 4 gemäß der Darstellung in der Zeichnung um 180°, d.h. achsensymmetrisch relativ zu der Wellenanordnung 8 angeordnet ist, bewirkt eine Drehung der Mantelwelle 10 in Richtung des Pfeiles C bzw. des Zahnrades 14' in Richtung des Pfeiles C eine Drehung des Zwischenrades 18' und damit des Teilkörpers 26' sowie über die Zwischenwelle 20' des Teilkörpers 24' in Richtung des Pfeiles D, d.h. in der gleichen Richtung wie im Falle des Rollenkörpers 4. Der Abtrieb aus dem Rollenkörper 6 erfolgt über das Zahnrad 16', so daß das in der Zeichnung rechte Teilstück der Mantelwelle 10 in Richtung des Pfeiles E dreht, d.h. wieder in Richtung wie im Falle des eingeleiteten Drehmomentes (Pfeil A) des Rollenkörpers 4. Ein sich somit an den Rollenkörper 6 anschließender weiterer Rollenkörper weist somit wiederum eine Getriebeanordnung wie im Falle des Rollenkörpers 4 auf, so daß auch die dortigen Teilkörper die gleichen Drehbewegungen ausführen, wie die Teilkörper 24 und 26 bzw. 24' und 26' der Rollenkörper 4 und 6. Erfolgt eine entsprechende Drehmomenteinleitung für sämtliche Rollenkörper 4 und 6 des gesamten multidirektionalen Antriebes 2, so wird ein auf den Teilkörpern 24 und 26 der Rollenkörper ruhendes Gut, beispielsweise eine Palette oder dergl. in Richtung des Pfeiles I gefördert. Eine Umkehr des eingeleiteten Drehmomentes, d.h., die Einleitung eines Drehmomentes in Richtung entgegengesetzt des Pfeiles A bewirkt eine Umkehrung der geschilderten Drehrichtungsverläufe, so daß ein auf den Rollenkörpern 4 und 6 gelagertes Gut entgegengesetzt der Richtung des Pfeiles I bewegt wird. Wird nun eine in der Zeichnung nicht dargestellte Kupplung betätigt, so daß die Mantelwelle 10 relativ zu der Drehwelle 12 verriegelt wird und erfolgt dann eine Drehmomenteinleitung auf die Mantelwelle 10 in Richtung des dargestellten Pfeiles A oder auf die Drehwelle 12 in Richtung des dargestellten Pfeiles F, so findet aufgrund der Verriegelung zwischen Mantelwelle 10 und Drehwelle 12 auch keine Relativbewegung zwischen diesen beiden Wellen statt, so daß die Rollenkörper 4 und 6 über die gesamte Längenerstreckung der Wellenanordnung 8 hinweg in Richtung des Pfeiles A bzw. F drehen, so daß ein auf den Rollenkörpern 4 und 6 abgestelltes Gut in Richtung des Pfeiles II bewegt wird. Eine Umkehr der eingeleiteten Drehrichtung bewirkt auch hier eine Umkehr der Förderrichtung, so daß das abgestellte Gut entgegengesetzt der Richtung des Pfeiles II bewegt wird.

Wird nun ein entsprechendes Feld in der X-Y-Ebene mit dem erfindungsgemäßen multidirektionalen Antrieb 2 bestehend aus einer Mehrzahl von zueinander parallel verlaufenden Wellenanordnungen 8 mit darauf gelagerten Rollenkörpern 4 und 6 vorgesehen, so kann ein auf diesem Feld abgestelltes Gut beliebig in X-Y-Richtung verfahren werden, je nachdem wie die Ansteuerung zwischen den Mantelwellen und Drehwellen erfolgt. Hierbei wäre es beispielsweise auch noch denkbar, entsprechende Kupplungen und Antriebe für die Mantelwelle 10 und die Drehwelle 12 nicht nur endseitig an der Wellenanordnung 8 vorzusehen, sondern auch im Bereich zwischen den beiden Endseiten einer Wellenanordnung 8, so daß einzelnen Rollenkörperfelder oder -züge individuell ansteuerbar sind.

Wie sich aus dem bisher Gesagten ergibt, ist der multidirektionale Antrieb nicht nur für Rollenbahnen oder dergl. besonders geeignet und hier insbesondere im Bereich von sogenannten Umsetzern oder Ecktischen, es ist vielmehr eine Anwendung in all jenen Fällen möglich, in denen zu förderndes Gut, beispielsweise Paletten oder Container möglichst automatisch und ohne Einwirkung von Menschenhand in X-Y-Richtung verfahren und positioniert werden müssen. So sind beispielsweise Einsatzfälle in automatischen Förderstraßen für Fertigungsbetriebe, Palettenlager oder dergl. denkbar. Besonders vorteilhaft ist die Anwendung des erfindungsgemäßen multidirektionalen Antriebes in Verbindung mit einem halb- oder vollautomatischen Parkplatzsystem, wie es in der deutschen Patentanmeldung P 3908858.8 der gleichen Anmelderin beschrieben ist. Auf diese Anmeldung wird hier insoweit vollinhaltlich Bezug genommen.

Insoweit zusammenfassend zeichnet sich der erfindungsgemäße multidirektionale Antrieb für Rollenbahnen oder dergl. dadurch aus, daß bei einfachem und robustem Aufbau mit einer geringen Anzahl von bewegten Teilen die Möglichkeit geschaffen wird, halb- oder vollautomatisch zu förderndes Gut rasch und zuverlässig zu bewegen, wobei Reversierbetriebe sowohl in X- als auch Y-Richtung problemlos möglich sind.

**Ansprüche**

1. Multidirektionaler Antrieb für Rollenbahnen mit einer Mehrzahl von hintereinander auf wenigstens einer kraftbetriebenen Welle gelagerten Rollenkörpern, deren Mantellinien in Längsrichtung der Welle oder senkrecht hierzu drehbar sind, dadurch gekennzeichnet, daß
die Welle als hohle Mantelwelle (10) ausgebildet ist, und zur koaxialen Aufnahme einer inneren Drehwelle (12) dient;
die Mantelwelle (10) im Bereich der Rollenkörper (4, 6) unterbrochen ist und dort jeweils zwei freie, einander gegenüberliegende Stirnseiten bildet;
an den freien Stirnseiten Zahnräder (14, 16) drehfest angeordnet sind, welche über ein dazu senkrechtes Zwischenrad (18) miteinander gekoppelt sind, wobei die Drehachse des Zwischenrades (18) die Längsachse der Drehwelle (12) schneidet;
die Drehbewegung des Zwischenrades (18) in eine Drehebene übertragen wird, die achsensymmetrisch zur Drehwelle (12) bezüglich der Drehebene des Zwischenrades (18) ist; und
daß der Rollenkörper aus zwei Teilkörpern (24, 26) besteht, die in beiden Drehebenen angeordnet sind, und die Mantelwelle (10) relativ zu der stillstehenden Drehwelle (12) drehbar ist.

2. Antrieb nach Anspruch 1, dadurch gekennzeichnet, daß Mantelwelle (10) und Drehwelle (12) für eine synchrone Drehung miteinander kuppelbar sind.

3. Antrieb nach Anspruch 1, dadurch gekennzeichnet, daß die Teilkörper (24, 26) annähernd Halbkugeln sind, welche von dem Zwischenrad (8) direkt und/oder indirekt angetrieben werden.

# EUROPÄISCHER RECHERCHENBERICHT

Nummer der Anmeldung

EP 90 10 5005

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3804230 (KRIVEC)  * das ganze Dokument * | 1-3 | B65G13/08 |
| A | US-A-3976177 (BROWN)  * Spalte 1, Zeilen 12 - 25; Figuren 1-8 * | 1 | |
| A | US-A-4180150 (MOORE)  * Figur 6 * | 1 | |
| D,A | DE-B-1237003 (ROECKNER)  * das ganze Dokument * | 1 | |
| D,A | DE-B-2515009 (KARL STUMPF)  * das ganze Dokument * | 1 | |

**RECHERCHIERTE SACHGEBIETE (Int. Cl.5)**

B65G

Der vorliegende Recherchenbericht wurde für alle Patentansprüche erstellt

| Recherchenort | Abschlußdatum der Recherche | Prüfer |
|---|---|---|
| BERLIN | 22 JUNI 1990 | SIMON, J |

EPO FORM 1503 03.82 (P0403)